# EUROPÄISCHE PATENTANMELDUNG

(11) **EP 2 942 136 A2**
(43) Veröffentlichungstag der Anmeldung: **11.11.2015**
(21) Anmeldenummer: 15162798.1
(22) Anmeldetag: 08.04.2015
(51) Int. Cl.: B23D 45/04, B23D 47/08, B23D 61/02, B23D 59/00

(54) **VORRICHTUNG UND VERFAHREN ZUM SCHNEIDEN EINES GEFRORENEN, STRANGFÖRMIGEN LEBENSMITTELS IN SCHEIBEN**

(30) Priorität: 15.04.2014 DE 102014105352
(71) Anmelder: TPV GmbH, 57641 Oberlahr (DE)
(72) Erfinder:
(74) Vertreter: Bauer, Dirk

(57) **Zusammenfassung**

Die vorliegende Erfindung betrifft eine Vorrichtung (1)zum Schneiden eines gefrorenen, strangförmigen Lebensmittels (2) in Scheiben mit einem Maschinengestell (3), einer Schneideinrichtung (4) mit einem in oder an dem Maschinengestell (3) gelagerten Schneidorgan (6) in Form eines Kreissägeblatts (7), das zum einen um seine Mittelachse (8) rotierbar und zum anderen innerhalb einer durch das Kreissägeblatt (7) definierten Schneidebene beweglich ist, und einem Zuführbereich (5) für das zu schneidende Lebensmittel (2), aus dem heraus das Lebensmittel (2) so auf die Schneideinrichtung (4) zu vorschiebbar ist, dass sukzessive Scheiben von dem Lebensmittel (2) abscheidbar sind, wobei das Lebensmittel (2) in dem Zuführbereich (5) in eine Vorschubrichtung (36) bewegbar ist, die senkrecht zu der Schneidebene verläuft. Zur Weiterentwicklung einer solchen Vorrichtung (1) ist gemäß der Erfindung vorgesehen, dass das Kreissägeblatt (7) drehantreibbar an einem in oder an dem Maschinengestell (3) gelagerten Arm (9) gelagert ist und mit dem Arm (9) um dessen gestellfeste Drehachse (10) umläuft oder oszilliert. Ferner betrifft die Erfindung noch ein entsprechendes Verfahren.

## Beschreibung

### Einleitung

Die vorliegende Erfindung betrifft eine Vorrichtung zum Schneiden eines gefrorenen, strangförmigen Lebensmittels in Scheiben mit
a) einem Maschinengestell,
b) einer Schneideinrichtung mit einem in oder an dem Maschinengestell gelagerten Schneidorgan in Form eines Kreissägeblatts, das zum einen um seine Mittelachse rotierbar und zum anderen innerhalb einer durch das Kreissägeblatt definierten Schneidebene bewegbar ist,
c) einem Zuführbereich für das zu schneidende Lebensmittel, aus dem heraus das Lebensmittel so auf die Schneideinrichtung zu vorschiebbar ist, dass sukzessive Scheiben von dem Lebensmittel abscheidbar sind, wobei das Lebensmittel in dem Zuführbereich in eine Vorschubrichtung bewegbar ist, die senkrecht zu der Schneidebene verläuft.

Ferner betrifft die Erfindung ein Verfahren zum Schneiden eines gefrorenen, strangförmigen Lebensmittels in Scheiben mit den folgenden Verfahrensschritten:
a) Das zu schneidende Lebensmittel wird in einen Zuführbereich einer Vorrichtung zum Schneiden eingelegt.
b) Aus dem Zuführbereich heraus wird das Lebensmittel auf eine Schneideinrichtung der Vorrichtung vorgeschoben, sodass mittels eines in Form eines Kreissägeblatts ausgebildeten Schneidorgans der Schneideinrichtung von dem Gutstrang an dessen vorderen Ende sukzessive Scheiben abgeschnitten werden.
c) Das Kreissägeblatt rotiert um seine Mittelachse und wird gleichzeitig innerhalb einer von dem Kreissägeblatt definierten Schneidebene bewegt.
d) Während des Vorschiebens wird das Lebensmittel in eine Vorschubrichtung bewegt, die senkrecht zu der Schneidebene verläuft.

### Stand der Technik

Die Vorrichtung sowie das Verfahren der eingangs beschriebenen Art sind in der Praxis bereits bekannt. Bei gefrorenen Lebensmitteln hat es sich bewährt, diese zwecks Zerkleinerung zu sägen. Typischerweise werden hierzu Bandsägen verwendet, wobei die Bedienung derselben durch die erforderliche händische Führung des Schneidguts mit relativ hohen Gefahren für die Bedienperson verbunden ist, so dass für die Betriebe hohe Versicherungsbeiträge anfallen. Aufgrund der geringen Stärke der Sägeblätter ist der durch Zerspanung bewirkte Schneidgutverlust gering.

Darüber hinaus sind Kreissägen zur Zerkleinerung von gefrorenen Lebensmitteln bekannt, wobei große einstückige Blöcke von gefrorenem Material auf eine Mehrzahl von Kreissägeblättern zugeführt werden, die die Blöcke in streifenförmige Stücke gleicher Abmessungen zerteilen. Dabei steht eine Messerebene der Kreissägeblätter jeweils parallel zu einer Vorschubrichtung der gefrorenen Blöcke.

Ferner ist aus der EP 0 429 711 B1 eine Schneidvorrichtung insbesondere von Fischprodukten bekannt, mittels der ein gewichtsgenaues Schneiden möglich sein soll. Der Schneidvorgang kann mit dieser Schneidvorrichtung auch quer zu einem Förderband erfolgen, also quer zu der Vorschubrichtung. Hierbei wird ein jeweiliges Schneidwerkzeug von einer Oberseite des Förderbandes her in das Lebensmittel abgesenkt und letzteres dabei geschnitten. Um fortlaufend mehrere Teile des Lebensmittels zu erzeugen, erfolgt eine linear oszillierende Bewegung des Schneidwerkzeugs, bei der sich selbiges fortlaufend hebt und wieder senkt, wobei bei jedem Senken das Lebensmittel geschnitten wird. Eine linear oszillierende Bewegung des Schneidwerkzeugs zwischen zwei Extrem-Positionen macht eine Richtungsumkehrung des Schneidwerkzeugs erforderlich, wobei hohe Massenkräfte entstehen, die einen unruhigen Lauf der Schneideinrichtung verursachen können. Darüber hinaus ist die hierzu benötigte Maschinenkonstruktion relativ aufwendig.

Aus der DE 11 88 250 ist eine Vorrichtung zum Zersägen von blockförmigen tief gefrorenen Lebensmitteln bekannt, die in Abkehr von der Verwendung von Bandsägen die Verwendung von Kreissägeblättern lehrt. Da jedoch mit steigendem Durchmesser der Kreissägeblätter auch ihre aus Sicherheitsgründen erforderliche Blattstärke anwachse (was bald zu einer solch großen Blattstärke führe, dass der Sägeabfall inakzeptabel groß würde), wird in der vorgenannten Auslegeschrift eine Sägevorrichtung vorgeschlagen, die jeweils zwei in derselben Ebene schneidende und in entgegen gesetzte Richtung mit gleicher Drehzahl angetriebene Sägeblätter aufweist. Um einen Lebensmittelblock der Dicke D zersägen zu können, werden somit zwei von entgegen gesetzten Seiten eingreifende Kreissägeblätter verwendet, die jeweils nur ungefähr die halbe Dicke D des Blocks durchdringen müssen, um im Endergebnis zwei sich über die gesamte Dicke D erstreckende Sägespalte zu erzeugen. Die beiden Kreissägeblätter der vorbekannten Vorrichtung sind still stehend und der zu sägende Lebensmittelblock wird in seiner Längsrichtung parallel zu der Ebene der Kreissägeblätter vorgeschoben. Um im Wege eines einzigen Vorschubvorgangs mehr als einen Sägeschnitt durch den Lebensmittelblock zu erzeugen, sind jeweils auf einer Kreissägeblatt-Welle mehrere Kreissägeblätter in axialer Richtung beabstandet angeordnet.

Ferner ist aus der DE 10 2010 002 279 A1 eine Maschine zum Schneiden von insbesondere Fleisch in Scheiben bekannt, wobei das Fleisch auch an- oder durchgefroren sein kann. Ein Kreismesser ist dabei drehantreibbar an einer Schwinge gelagert, die um eine außerhalb des Schneidquerschnitts angeordnete und parallel zu einer Vorschubrichtung orientierte Drehachse rotiert (Orbitalantrieb). Um einen sägeartigen Effekt zu erzielen, beträgt das Verhältnis der Drehzahl des Kreismessers zu der Drehzahl der Schwinge bei gefrorenen Lebensmitteln mindestens 6:1 (vorzugsweise mindesten 8:1). Gleichwohl handelt es sich bei dieser vorbekannten Maschine um eine Schneidemaschine und keine Kreissäge, da zum einen beim Trennvorgang keine Späne anfallen und zum anderen das Kreismesser nicht mit Zähnen versehen ist, die in Umfangsrichtung des Messers eine Zerspanungswirkung entfalten und einen Materialabtransport aus dem Schneidspalt bewirken könnten. Die Maschine gemäß der DE 10 2010 002 279 A1 ist daher gattungsfremd im Vergleich mit dem Gegenstand der vorliegenden Anmeldung.

### Aufgabe

Der vorliegenden Erfindung liegt demzufolge die Aufgabe zugrunde, ein Verfahren sowie eine Vorrichtung der eingangs beschriebenen Art derart weiterzuentwickeln, dass die vorgenannten Nachteile nicht auftreten.

### Lösung

Vorrichtungsgemäß wird diese Aufgabe erfindungsgemäß dadurch gelöst, dass das Kreissägeblatt drehantreibbar an einem in oder an dem Maschinengestell gelagerten Arm gelagert ist und mit dem Arm um dessen gestellfeste Drehachse fortlaufend umläuft (oszilliert). Auf diese Weise wird das Sägeblatt entweder stets umlaufend in eine Richtung bewegt, so dass ein Richtungswechsel, wie er bei einer translatorischen Hin- und HerBewegung erforderlich ist, wegfällt. Der Arm, der auch als Schwinge bezeichnet werden kann, führt eine umlaufende Bewegung um seine gestellfeste Drehachse aus. Das Sägeblatt ist typischerweise an einem der gestellfesten Drehachse gegenüberliegenden Ende des Arms angebracht, wobei es zusätzlich um seine eigene Drehachse rotiert. Eine solche Schneideinrichtung zeichnet sich durch einen ruhigen Lauf sowie eine günstige Konstruktion im Hinblick auf die Kosten und die Ausführung aus. Alternativ kann die Schwinge aber auch oszillierend bewegt werden, wodurch eine platzsparende Bewegungsform realisiert wird, ohne den möglichen maximalen Schneidquerschnitt einzuschränken. Darüber hinaus wird das Lebensmittel bei beiden Alternativen nicht - wie im Stand der Technik üblich - von Hand geführt, vielmehr läuft der Vorschub des Lebensmittels ebenfalls automatisiert ab, was hinsichtlich der Bedienung die Sicherheit erhöht, das Verletzungsrisiko senkt und letztendlich hinsichtlich der Versicherungsbeiträge einen positiven Einfluss hat.

Gemäß einer besonders vorteilhaften Weiterbildung der erfindungsgemäßen Vorrichtung ist die Dicke des Kreissägeblatts, mindestens im Bereich von Zähnen, vorzugsweise in einem Ringbereich, der sich von einem Außendurchmesser des Kreissägeblatts 20 mm bis 30 mm radial in Richtung der Mittelachse erstreckt, kleiner als 2 mm, vorzugsweise kleinerer als 1,8 mm, weiter vorzugsweise kleiner als 1,7 mm. Zusätzlich oder alternativ sollte der Durchmesser des Kreissägeblatts mehr als 500 mm, vorzugsweise größer als 550 mm, weiter vorzugsweise größer als 600 mm betragen.

Bei dem Sägevorgang werden systembedingt Stücke des Lebensmittels in der Breite der einzelnen Zähne des Sägeblatts herausgetrennt, die als Abfall keine Verwendung als Lebensmittel finden. Aus diesem Grunde ist man bestrebt, diese Sägeverluste so gering wie möglich zu halten. Bisher werden zum Schneiden von gefrorenen Lebensmitteln hauptsächlich Bandsägen verwendet, was nicht zuletzt darauf zurück zu führen ist, dass deren Sägeblätter sich durch eine geringe Dicke von zwischen 0,8 mm und 1,2 mm auszeichnen. Im Gegensatz hierzu weisen die Sägeblätter bisher bekannter Kreissägen technisch bedingt eine Dicke von etwa 4 mm auf, was die Verwendung einer Kreissäge aufgrund des hohen Sägeverlustes beim Schneiden gefrorener Lebensmittel unrentabel macht. Auch unter dem Gesichtspunkt, dass die Bandsägen durch die hohe Verletzungsgefahr hohe Versicherungsbeiträge induzieren, bleiben die Bandsägen gegenüber den Kreissägen aus dem Stand der Technik lukrativer.

Durch die Reduzierung der Dicke des Kreissägeblatts in dem relevanten Außenbereich des Kreissägeblatts auf maximal die Hälfte der bisherigen Dicke oder sogar weniger, wird der Sägeverlust deutlich reduziert, so dass die Verwendung einer erfindungsgemäßen Vorrichtung insbesondere aus Sicherheitsaspekten besonders interessant wird.

Einer Reduzierung der Dicke des Kreissägeblatts stand bisher eine mangelnde Stabilität beziehungsweise eine verstärkte Schwingung eines dünnen Kreissägeblatts entgegen, die eine hohe Geräuschemission mit sich bringt. Um Geräuschemissionen typischerweise zu reduzieren werden im Stand der Technik Einschnitte in das Kreissägeblatt eingebracht, die vom äußeren Umfang radial verlaufen und einige Zentimeter lang sind (so genannter "Notenschlüssel"). Hierdurch wird das Entstehen von Eigenschwingungen behindert. Ferner wird durch Reibung infolge von in die Einschnitte eindringenden Materials an den Einschnitten eine Dämpfung erzielt. Bei dem erfindungsgemäßen Kreissägeblatt mit geringer Dicke hat sich jedoch gerade gezeigt, dass diese Einschnitte kontraproduktiv sind, so dass die erfindungsgemäßen Kreissägeblätter keine solchen Einschnitte aufweisen. Vielmehr bestehen sie - abgesehen von den Zähnen - aus einer durchgehenden Metallscheibe.

Ferner ist es von Vorteil, wenn eine in Umfangsrichtung des Kreissägeblattes gemessene Breite der Zähne kleiner als 20mm, vorzugsweise kleiner als 15mm, weiter vorzugsweise kleiner als 12 mm, noch vorzugsweise kleiner als 10 mm beträgt und/oder der Abstand der Schneidkanten jeweils benachbarter Zähne kleiner als 22, vorzugsweise kleiner als 20 mm, weiter vorzugsweise kleiner als 18 mm beträgt. Durch eine geringere Breite der Zähne reduziert sich der Widerstand des Kreissägeblatts bei dem Eintritt in das zu schneidende gefrorene Lebensmittel. Ferner ist es somit möglich, mehr Zähne am Umfang des Kreissägeblatts unterzubringen, wodurch sich die Anzahl der an den Zähnen befindlichen Schneidkanten und somit auch die Schneidleistung des Kreissägeblatts erhöht. Außerdem wird der Sägeschnitt feiner.

Vorteilhafterweise bestehen Schneidkanten von Zähnen des Kreissägeblatts aus Hartmetall, wobei sie vorzugsweise von Einsatzstücken aus Hartmetall gebildet sind. Somit sind die beim Schneiden des Lebensmittels am meisten beanspruchten Bereiche des Kreissägeblatts besonders fest und verschleißarm. Werden die Schneidkanten von Einsatzstücken aus Hartmetall gebildet, sind diese im Zuge von Wartungsarbeiten besonders gut austauschbar.

Dabei ist ferner vorteilhaft, wenn eine von einer Schneidkante ausgehende Spanfläche eines Zahnes mit einer sich in Richtung eines Grundes einer Spankammer anschließenden Vorderfläche des betreffenden Zahns fluchtet beziehungsweise eine gemeinsame Ebene bildet, so dass sich bildende Späne ohne Behinderung oder Umlenkung in die Spankammer gelangen.

Alternativ kann vorgesehen sein, dass die von der Schneidkante ausgehende Spanfläche eines Zahns mit einer der Spankammer abgewandten Rückseite des Einsatzstücks einen Winkel bildet, der zwischen 25° und 35°, vorzugsweise zwischen 28° und 32° beträgt.

Es hat sich als besonders von Vorteil erwiesen, wenn ein Keilwinkel der Zähne des Kreissägeblatts zwischen 48° und 68°, vorzugsweise zwischen 55° und 60° beträgt und/oder ein Spanwinkel der Zähne des Kreissägeblatts zwischen 15° und 35°, vorzugsweise zwischen 23° und 30° beträgt und/oder ein Freiwinkel der Zähne des Kreissägeblatts zwischen 4° und 16°, vorzugsweise zwischen 8° und 12° beträgt.

Beträgt eine Differenz zwischen dem Außendurchmesser des Kreissägeblatts und dem Durchmesser eines Kreises, auf dem sich die Gründe der Spankammern befindet, mindestens 20 mm, vorzugsweise mindestens 25 mm, so ergibt sich eine relativ lange Zahnlänge sowie eine lange Spankammer. Dies ist deshalb von Vorteil, da das zerspante Gut in der Spankammer gesammelt werden soll, um ein Schmieren beim Schneidvorgang zu verhindern. Somit ist es positiv, wenn ein Spankammervolumen größer ist als das Volumen des Zerspanten.

Im Hinblick auf die Krafteinleitung der Hartmetall-Einsatzstücke in das Kreissägemesser ist es besonders vorteilhaft, wenn ein der Drehachse des Kreismessers zugewandter Fußabschnitt von Hartmetall-Einsatzstücken zu einem dem Grund der Spankammer abgewandten Endabschnitt der Vorderfläche des Zahnes hin von einer Haltenase abgestützt ist. Die typischerweise angelöteten Einsatzstücke können sich somit bei Beanspruchung an der Haltenase abstützen, wodurch auch die Lötverbindung dauerhafter wird.

Gemäß einer besonders bevorzugten Weiterbildung der Erfindung verläuft eine der im Entstehen begriffenen Scheibe des zu schneidenden Lebensmittels zugewandte Seitenfläche des Kreismessers unter einem Winkel zwischen 2° und 0,2°, vorzugsweise unter einem Winkel zwischen 1° und 0,4° geneigt zu einer gegenüber liegenden Seitenfläche des Kreismessers, so dass eine Dicke des Sägeblatts in radiale Richtung nach außen abnimmt, wobei vorzugsweise die gegenüber liegende Seitenfläche des Kreissägeblatts gegenüber der Drehachse unter einem Winkel von 90° verläuft. Demnach verläuft das Kreissägeblatt ausgehend von seiner Mitte auf einer Seite jeweils kegelförmig zu den äußeren Rändern. Hierdurch weist das Kreissägeblatt an seinem äußeren Umfang eine geringere Dicke auf als in der Mitte desselben, weshalb das Eindringen des Kreissägeblatts in ein gefrorenes Lebensmittel aufgrund des verringerten Anfangswiderstands deutlich einfacher erfolgt.

Bezüglich der Ausgestaltung des Kreissägeblatts ist es ferner von Vorteil, wenn es in einem äußeren Ringbereich, der sich von einem Außendurchmesser des Kreissägeblatts radial in Richtung der Mittelachse erstreckt, sowie in einem inneren Kreisbereich, der sich von einem Mittelpunkt des Kreissägeblatts radial nach außen erstreckt, parallel zueinander verlaufende Seitenflächen besitzt, während die Seitenflächen des Kreissägeblatts in einem inneren Ringbereich, der sich zwischen dem äußeren Ringbereich und dem inneren Kreisbereich erstreckt, geneigt zueinander verlaufen. Der äußere Ringbereich ist dabei typischerweise dünner ausgebildet, als die übrigen Bereiche, so dass der erste Eintritt des Kreissägeblatts in das Lebensmittel vereinfacht ist. Bei dem weiteren Eintritt des Kreissägeblatts in das Lebensmittel gelangt auch der einseitig abgeschrägte Bereich desselben in das Lebensmittel, wobei der abgeschrägte Bereich wie ein Keil wirkt, der die Scheibe, die im Entstehen begriffen ist, von dem Lebensmittelstrang wegdrückt. Der abgeschrägte Bereich öffnet somit den Schneidspalt im Lebensmittel, wodurch der Schneidvorgang als solcher verbessert wird.

Dabei kann es darüber hinaus von Vorteil sein, wenn die Hartmetall-Einsatzstücke über mindestens eine der beiden Seitenflächen des Kreismessers in axiale Richtung überstehen und zwar vorzugsweise um ein Maß zwischen 0,05 mm und 0,25 mm, weiter vorzugsweise zwischen 15mm und 20mm. Ebenfalls gut geeignet kann das Intervall zwischen 20mm und 25mm sein. Hierdurch entsteht beim Schneidvorgang ein minimaler Spalt zwischen den Seitenflächen des Kreismessers und dem geschnittenen Lebensmittel, wodurch eine Reibung oder ein Verkleben zwischen den Seitenflächen und dem Lebensmittel reduziert oder unterbunden wird.

Zur Gewährleistung der Haltbarkeit des Kreissägeblatts, das typischerweise sehr dünn und äußerst hart ausgebildet ist, so dass es bei Auftreten zu großer Kräfte brechen kann, hat es sich als vorteilhaft erwiesen, eine Abschaltautomatik und/oder Reduzierung der Winkelgeschwindigkeit des Arms vorzusehen, die jeweils bei einer Überschreitung eines Grenzwertes für einen Widerstand des Arms bei dem Durchtritt des Kreissägeblatts durch das Lebensmittel, aktivierbar ist. Insbesondere wenn ein Kreissägeblatt bereits länger im Einsatz ist, kann die Schärfe desselben sinken, so dass die Schneidleistung nachlässt. Bei gleich bleibender Drehzahl des Arms nimmt die Zerspanungsleistung des Kreissägeblatts mit geringerer Schärfe ab, so dass sich die "Vorschubgeschwindigkeit" durch das Lebensmittel reduziert, so dass sich die von dem Arm auf das Kreissägeblatt aufgebrachte Kraft deutlich erhöht und es zu einem Kreissägeblattbruch kommen kann. Auch kann es zu einer sprunghaften Erhöhung der auf das Kreissägeblatt wirkenden Kraft kommen, wenn sich unerwartet Fremdkörper, beispielsweise metallischer Natur, in dem Lebensmittel befinden. Um einen Kreissägeblattbruch zu vermeiden wird erfindungsgemäß die Abschaltautomatik aktiviert, so dass der Arm, an dem das Kreissägeblatt gelagert ist, abgesehen von einem trägheitsbedingten Weiterrotieren in seiner Winkelgeschwindigkeit reduziert bzw. gänzlich zum Stillstand kommt, wobei das Kreissägeblatt seine Rotation fortführen kann. Wie bereits erwähnt, kann auch lediglich eine Drehzahlreduzierung des Arms vorgesehen sein, so dass der Arm sich langsamer weiterdreht und dem Kreissägeblatt mehr Zeit verbleibt, seinen Schnitt zu vollführen. Eine kombinierte Ausstattung der erfindungsgemäßen Vorrichtung mit einer Drehzahlreduzierung des Arms und einer Abschaltautomatik desselben ist ebenfalls denkbar.

Ferner ist es möglich, alternativ oder zusätzlich eine Drehzahlreduzierung und/oder Abschaltautomatik des Kreissägeblatts vorzusehen, die ebenfalls bei Überschreiten eines Grenzwertes für einen Widerstand des Kreissägeblatts beim Schneidvorgang aktivierbar ist. Typischerweise sind Kreissägeblatt und Arm mit eigenen, getrennt regelbaren Antrieben versehen. Eine Messung des jeweils aktuell an dem Kreissägeblatt angreifenden Drehmoments kann über die Messung der Stromaufnahme des betreffenden Antriebsmotors erfolgen. Dasselbe gilt für die Messung des jeweils aktuell an dem Arm angreifenden Drehmoments, wobei in diesem Falle die Stromaufnahme des Antriebsmotors des Arms heranzuziehen ist. Eine Messung der Winkelgeschwindigkeit des Arms und/oder des Kreissägeblatts kann mit Hilfe von jeweils einem Impulsgeber erfolgen, der in dem Antriebsstrang des Arms und/oder des Kreissägeblatts angeordnet ist.

Gemäß einem weiteren eigenständigen Aspekt der Erfindung ist ein Schneidguthalter zum Halten des zu schneidenden Lebensmittels an seinem in Vorschubrichtung betrachtet hinteren Ende vorgesehen, wobei mindestens ein oberes Eingriffelement des Schneidguthalters mit einer einem Boden des Zuführbereichs abgewandten Oberfläche des Lebensmittels formschlüssig in Eingriff bringbar ist. Zusätzlich ist ein Niederhalter mit mindestens zwei Kontaktbereichen, an denen der Niederhalter mit der dem Boden des Zuführbereichs abgewandten Oberfläche des Lebensmittels in Kontakt bringbar ist, vorgesehen, wobei benachbarte Kontaktbereiche senkrecht zu der Vorschubrichtung und parallel zu dem Boden des Zuführbereichs betrachtet einen Abstand zueinander aufweisen, der einer maximalen Breite eines oberen Eingriffelements entspricht, so dass das obere Eingriffelement und der Niederhalter mit dem Lebensmittel in direktem Kontakt ist, bis eine letzte Scheibe des Lebensmittels abgeschnitten ist. Auf diese Weise wird insbesondere ein zum Ende des Schneidvorgangs verbleibender Rest des zu schneidenden Lebensmittels, der aufgrund seiner geringen Länge typischerweise zum Kippen neigt, sowohl von dem Niederhalter heruntergedrückt und von dem Schneidguthalter gehalten, so dass eine deutlich verbesserte Fixierung des Reststücks beim Schneidvorgang gewährleistet wird. Diese Kombination des Niederhalters mit dem Schneidguthalter kann auch bei beliebigen andersartigen Schneidmaschinen eingesetzt werden, beispielsweise bei Maschinen, die nicht über einen Orbitalantrieb des Schneidorgans verfügen oder mit einem Messer anstelle eines Sägeblatts ausgestattet sind.

Alternativ oder zusätzlich kann die erfindungsgemäße Vorrichtung mit einem Schneidguthalter zum Halten des zu schneidenden Lebensmittels an seinem in Vorschubrichtung betrachtet hinteren Ende ausgestattet sein, wobei mindestens ein oberes Eingriffelement des Schneidguthalters mit einer einem Boden des Zuführbereichs abgewandten Oberfläche des Lebensmittels formschlüssig in Eingriff bringbar ist. Um das gefrorene, strangförmige Lebensmittel beim Schneidvorgang besonders gut zu fixieren, ist gemäß der Erfindung mindestens ein unteres Eingriffelement vorgesehen, das von einer dem Boden des Zuführbereichs zugewandten Oberfläche des Lebensmittels formschlüssig in Eingriff bringbar ist. Folglich können das mindestens eine obere Eingriffelement und das mindestens eine untere Eingriffelement als Zange aufgefasst werden, mittels der das zu schneidende Lebensmittel auf seiner Ober- sowie Unterseite gehalten wird. Aufgrund der Tatsache, dass das zu schneidende gefrorene Lebensmittel sehr rutschig ist und meist Knochen sowie eine unförmige bzw. unregelmäßige Gestalt aufweist, ist es zweckmäßig, wenn während des Schneidvorgangs des Lebensmittels besonderes Augenmerk auf die Fixierung desselben gelegt wird. Insbesondere ist eine gute Fixierung des Schneidguts wichtig, um eine Verkantung des Sägeblatts im Sägespalt infolge einer ungewollten Verlagerung des Lebensmittelstrangs (anders als in Vorschubrichtung) zu vermeiden, durch die das Sägeblatt nämlich zu Bruch gehen könnte. Auch diese erfindungsgemäße zangenartige Ausbildung des Schneidguthalters kann bei sämtlichen Schneidmaschinen eingesetzt werden, unabhängig von der Art der Schneidvorrichtung oder anderen Elementen. Hierzu kann der Schneidguthalter und/oder der Schachtboden mit kleinen zueinander beabstandeten Rippen versehen sein, die parallel zur Vorschubrichtung verlaufen und einem Wegrutschen bzw. Verdrehen des gefrorenen - und somit äußerst harten - Lebensmittels vorbeugen.

Bezüglich der Fixierung des Lebensmittels kann es darüber hinaus vorteilhaft sein, wenn mindestens ein oberes Eingriffelement und/oder mindestens ein unteres Eingriffelement an jeweils einem Arm angeordnet ist, die vorzugsweise beide um jeweils eine senkrecht zu der Vorschubrichtung und parallel zu dem Boden des Vorschubbereichs ausgerichtete Drehachse schwenkbar sind, um von gegenüber liegenden Oberflächenbereichen eine Spannkraft auf das zwischen den Eingriffelementen befindliche Lebensmittel auszuüben. Durch Aufbringung einer Spannkraft auf das Lebensmittel kann selbiges besonders zuverlässig gehalten und eine Formschlussverbindung hergestellt werden.

Vorteilhafterweise besitzt der Schneidguthalter ein Anschlagelement, das in Vorschubrichtung betrachtet einstellbar ist, wobei die Eingriffelemente in Vorschubrichtung betrachtet, vor dem Anschlagelement angeordnet sind. Abhängig von einer individuellen Einstellung der genauen Lage des Anschlagelements wird auf diese Weise ein definierter Abstand zwischen dem Ende des zu schneidenden Lebensmittels und dem Eingriffbereich der Eingriffelemente gewährleistet. Somit kann ausgeschlossen werden, dass die Eingriffelemente an unerwünschten Stellen eingreifen und den Schneidvorgang behindern.

Bezüglich einer Weiterbildung des erfindungsgemäßen Schneidguthalters hat es sich als besonders vorteilhaft gezeigt, wenn er über ein zwischen dem mindestens einen oberen und unteren Eingriffelement, an abgewandten Enden der Arme angeordnetes Antriebselement verfügt, mittels dessen die Eingriffelemente durch entgegen gesetztes Verschwenken der Arme einander annährbar sind, wobei das Antriebselement vorzugsweise als Kolben-Zylinder-Einheit, vorzugsweise als Pneumatikzylinder oder Hydraulikzylinder ausgebildet ist. Hierdurch ist ein Mechanismus geschaffen, mit dem eine Spannkraft auf das zu schneidende Lebensmittel aufgebracht werden kann.

Darüber hinaus hat sich der Schneidguthalter der Vorrichtung als besonders zweckdienlich erwiesen, wenn er ein Gelenk-Viereck aufweist, dessen Ecken von den beiden Schwenkachsen der Arme und zwei Gelenken zwischen den den Eingriffelementen abgewandten Enden der Arme und gegenüberliegenden Enden des Antriebselements gebildet wird, wobei eine Seite des Gelenkvierecks von dem eine variable Länge aufweisenden Antriebselement und zwei daran anschließende Seiten des Gelenkvierecks von Abschnitten der Arme gebildet werden, wobei des Weiteren beide Schwenkachsen der Arme an einem Lagerbock angeordnet sind, der mittels einer Vorschubeinrichtung in Vorschubrichtung vorschiebbar ist. Insbesondere hat sich dieses Gelenk-Viereck besonders bei der erfindungsgemäßen Vorrichtung zum Schneiden von gefrorenen Lebensmitteln bewährt, da der Einlegebereich typischerweise mit einer sich nach unten hin verjüngende Rinne versehen ist, in der das Lebensmittel geführt wird. Die Rinne besitzt demnach z.B. einen Querschnitt in Form eines gleichschenkligen Trapezes, wobei sich die kurze Seite am Rinnengrund befindet und die lange Seite an der Rinnenoberseite. Diese Rinnengeometrie erlaubt es einem unregelmäßig geformten Lebensmittel, beispielsweise in Form einer dünner werdenden Rinder-Beinscheibe, immer ausreichende Führung durch die schräg verlaufenden Rinnenwände zu erhalten, so dass es seitlich gehalten ist. Dadurch, dass die Arme des Schneidguthalters über ein Gelenk-Viereck verfügen, können die Arme eine Presskraft auf das Lebensmittel ausüben, wobei die Arme gemeinsam vertikal verschieblich sind. Somit können die Eingriffelemente der Position des Lebensmittels in vertikaler Richtung folgen, insbesondere wenn sich der Querschnitt desselben im Bereich des Schneidorgans infolge des fortschreitenden Schneidvorgangs verändert.

Bezüglich der Eingriffelemente hat sich als vorteilhaft erwiesen, wenn mindestens eines der Eingriffelemente als separates Teil ausgebildet ist und lösbar mit dem Schneidguthalter verbunden, vorzugsweise lösbar an dem zugehörigen Arm angebracht, ist. Hierdurch sind die Eingriffelemente schnell und einfach austauschbar, so dass insbesondere in Abhängigkeit von den jeweiligen Anforderungen Eingriffelemente verschiedener Geometrien eingesetzt werden können. Das Eingriffelement wird insbesondere zusammengesetzt aus Dornen oder Zähnen, die in das Lebensmittel eingreifen, und einem Bauteil, an dem die Dornen oder Zähne angebracht sind.

Schließlich sei bezüglich der erfindungsgemäßen Vorrichtung angemerkt, dass die verschiedenen Merkmale der Unteransprüche je einzeln für sich oder zu mehreren in beliebigen Kombinationen bei Varianten der Erfindung verwirklicht sein können.

Verfahrensmäßig wird die eingangs genannte Aufgabe gelöst wird durch folgendes Merkmal:
e) Ein Arm, an dem die Mittelachse des Kreissägeblatts gelagert ist, wird um eine gestellfeste Drehachse rotiert d oder vollführt eine oszillierende Bewegung um diese Drehachse..

Das erfindungsgemäße Verfahren zeichnet sich durch die zuvor im Zusammenhang mit der erfindungsgemäßen Vorrichtung genannten Vorteile aus und ist darüber hinaus besonders einfach mit einer solchen erfindungsgemäßen Vorrichtung durchführbar.

Das Verfahren ausgestaltend ist vorgesehen, dass die Drehzahl n_{K} des Kreissägeblatts im Verhältnis zu der Drehzahl n_{A} beziehungsweise Winkelgeschwindigkeit des Arms mindestens so groß gewählt wird, dass das Volumen der Späne, die während eines Durchlaufs eines Zahns durch den in dem zu schneidenden Lebensmittel erzeugten Sägespalt erzeugten Späne ein Volumen besitzen, das kleiner ist als das Volumen der zwischen zwei benachbarten Zähnen befindlichen Spankammer, wobei die Drehzahl des Kreissägeblatts vorzugsweise größer als 1800 1/min, weiter vorzugsweise größer als 2000 1/min beträgt. Mit der Anpassung der beiden Drehzahlen auf die vorgenannte Art wird gewährleistet, dass das zerspante Gut in den Spankammern untergebracht werden kann, bevor es bei der Rotation des Kreismessers aus selbigen geschleudert wird. Somit wird einem Schmieren von zerspantem Gut auf der Kreissägenblattoberfläche beim Schneidvorgang vorgebeugt. Die Drehzahl beziehungsweise Oszillationsfrequenz des Arms sollte somit vorzugsweise größer als 30 1/min, weiter vorzugsweise größer als 50 1/min, noch weiter vorzugsweise größer als 100 1/min betragen.

Vorteilhafterweise ist vorgesehen, dass die Rotation oder Oszillationsbewegung des Arms bei Überschreiten eines Grenzwertes eines Widerstands des Arms bei dem Durchtritt des Kreissägeblatts durch das Lebensmittel abgeschaltet wird. Wie bereits oben ausgeführt, kann somit die Gefahr eines Kreissägeblattbruchs minimiert werden.

Auch ist es möglich, dass die Drehzahl n_{A} des Arms bei Überschreiten des Grenzwertes eines Widerstands des Arms bei dem Durchtritt des Kreissägeblatts durch das Lebensmittel reduziert wird.

Ferner ist es von Vorteil, wenn ein oberes Eingriffelement eines Schneidguthalters mit einer einem Boden des Zuführbereichs abgewandten Oberfläche des Lebensmittels an seinem in Vorschubrichtung betrachtet hinteren Ende formschlüssig in Eingriff gebracht wird und ein Niederhalter mit der dem Boden des Zuführbereichs abgewandten Oberfläche des Lebensmittels an einem in Vorschubrichtung betrachtet vorderem Ende in Kontakt gebracht wird, wobei das obere Eingriffelement und der Niederhalter mit dem Lebensmittel in direktem Kontakt sind, bis eine letzte Scheibe des Lebensmittels abgeschnitten ist. Hieraus ergibt sich der bereits zuvor angeführte Vorteil, dass insbesondere ein zum Ende des Schneidvorgangs verbleibender Rest des zu schneidenden Lebensmittels, der aufgrund seiner geringen Länge typischerweise zum Kippen neigt, sowohl von dem Niederhalter heruntergedrückt und von dem Schneidguthalter gehalten, so dass eine deutlich verbesserte Fixierung des Reststücks beim Schneidvorgang gewährleistet wird.

Alternativ oder zusätzlich kann das Verfahren derart vorgesehen sein, dass ein oberes Eingriffelement eines Schneidguthalters mit einer einem Boden des Zuführbereichs abgewandten Oberfläche des Lebensmittels an seinem in Vorschubrichtung betrachtet hinteren Ende formschlüssig in Eingriff gebracht wird, wobei ein unteres Eingriffelement mit einer dem Boden des Zuführbereichs zugewandten Oberfläche des Lebensmittels an seinem in Vorschubrichtung betrachtet hinteren Ende formschlüssig in Eingriff gebracht wird. Hier ergeben sich insbesondere die bei der vormals beschriebenen Vorrichtung angeführten Vorteile analog.

### Ausführungsbeispiele

Das erfindungsgemäße Verfahren sowie die erfindungsgemäße Vorrichtung werden nachfolgend anhand eines Ausführungsbeispiels, das in den Figuren dargestellt ist, näher erläutert.

Es zeigt:
- Figur 1:: eine dreidimensionale Ansicht einer erfindungsgemäßen Vorrichtung zum Schneiden,
- Figur 2:: eine vergrößerte Darstellung der Vorrichtung aus Figur 1 im Bereich des Schneidrahmens,
- Figur 3:: eine Ansicht des Kreissägeblatts aus Figur 1,
- Figur 4:: einen Schnitt durch das Kreissägeblatt aus Figur 3,
- Figur 5:: einen weiteren Schnitt durch das Kreissägeblatt aus Figur 3,
- Figur 6:: eine vergrößerte Darstellung des Kreissägeblatts im Bereich der Zähne,
- Figur 6a:: eine vergrößerte Darstellung eines alternativen Kreissägeblatts im Bereich der Zähne,
- Figur 7:: einen Vertikalschnitt durch die Vorrichtung aus Figur 1 im Bereich des Kreissägeblatts,
- Figur 8:: eine dreidimensionale Ansicht des Schneidguthalters aus Figur 1,
- Figur 9:: eine dreidimensionale Ansicht eines alternativen Schneidguthalters,
- Figur 10:: eine Vorderansicht des Schneidguthalters aus Figur 1,
- Figur 11:: eine Rückansicht des Schneidguthalters aus Figur 1,
- Figur 12:: eine dreidimensionale Ansicht einer erfindungsgemäßen Vorrichtung mit alternativ ausgebildetem Niederhalter und Schneidguthalter,
- Figur 13:: eine vergrößerte Darstellung der Vorrichtung aus Figur 12 im Bereich des Schneidrahmens,
- Figur 14:: eine dreidimensionale Draufsicht auf einen erfindungsgemäßen Schneidguthalter aus Figur 12,
- Figur 15:: eine dreidimensionale Unteransicht des Schneidguthalters aus Figur 12 und
- Figur 16:: eine dreidimensionale Ansicht einer alternativen Vorrichtung.

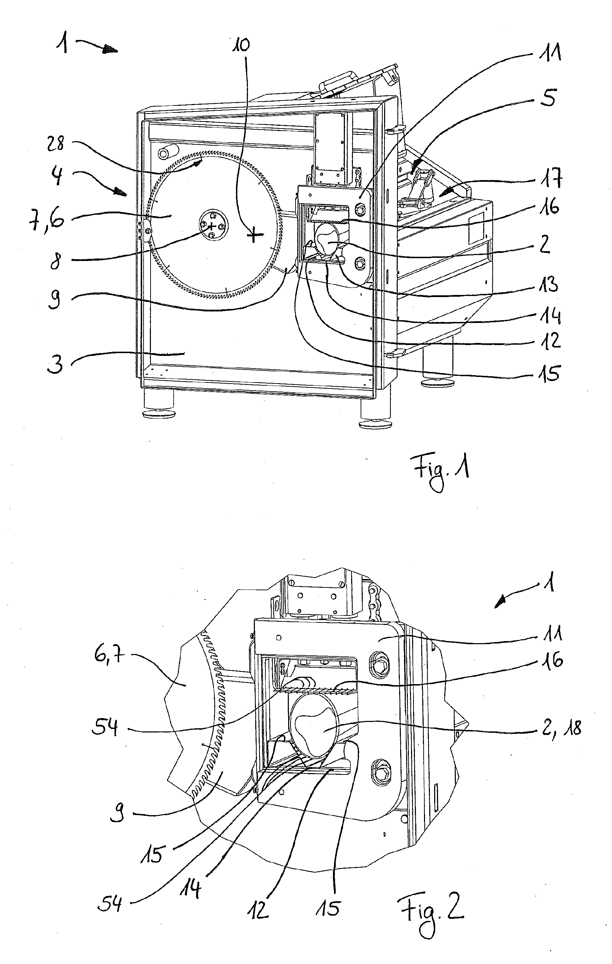

In der Figur 1 ist eine erfindungsgemäße Vorrichtung 1 zum Schneiden eines gefrorenen, strangförmigen Lebensmittels 2 in Scheiben in einer dreidimensionalen Ansicht dargestellt. Die Vorrichtung 1 verfügt unter anderem über ein Maschinengestell 3, eine Schneideinrichtung 4 und einen Zuführbereich 5, aus dem das Lebensmittel 2 so auf die Schneideinrichtung 4 zu vorschiebbar ist, dass sukzessive Scheiben davon abgeschnitten werden können. Die Schneideinrichtung 4 umfasst ein Schneidorgan 6 in Form eines Kreissägeblatts 7, das um eine Mittelachse 8 rotierbar ist und das eine Schneidebene definiert. Dabei ist das Kreissägeblatt 7 an einem Arm 9 gelagert, der wiederum um eine an dem Maschinengestell 3 feste Drehachse, die von dem Kreissägeblatt 7 in der Figur verdeckt ist und durch ein Kreuz 10 angedeutet ist, umläuft, so dass das Kreissägeblatt 7 zum einen um die Drehachse (Kreuz 10) des Arms 9 und zum anderen um seine eigene Drehachse, die seiner Mittelachse 8 entspricht, umläuft. Auf diese Weise gelangt das Kreissägeblatt 7 bei jeder Drehung des Arms 9 in den Zuführbereich 5, in dem das Lebensmittel 2 kontinuierlich oder taktweise vorgeschoben wird, so dass von diesem Scheiben abgeschnitten werden.

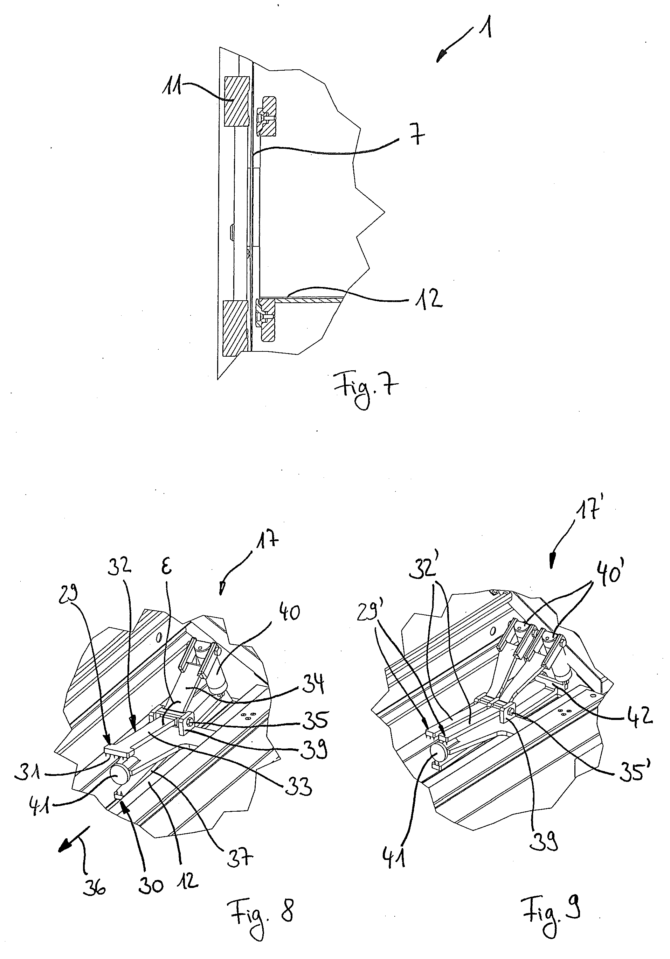

In der Figur 1 ist ein Schneidrahmen 11 sowie ein Schachtboden 12 des Zuführbereichs 5 erkennbar, der mit einer Rinne 13 versehen ist, die sich über eine gesamte Länge L des Schachtbodens 12 erstreckt. Die Rinne 13 weist einen trapezförmigen Querschnitt auf, wobei ein Rinnengrund 14 schmaler ist als eine Rinnenoberseite 15. Diese Rinnenform eignet sich insbesondere für die Zuführung von strangförmigen Lebensmitteln 2, die einen unregelmäßigen Querschnitt aufweisen. Das in der Figur 1 dargestellte Lebensmittel 2 wird an einem vorderen Ende mittels eines Niederhalters 16 herunter gedrückt. Im hinteren Bereich der erfindungsgemäßen Vorrichtung 1 gemäß Figur 1 ist ein Schneidguthalter 17 zu erkennen, der mit einem nicht in der Figur 1 sichtbaren Ende des Lebensmittels 2 in Eingriff ist. Auf den Schneidguthalter 17 wird noch in den Figuren 8 bis 11 näher eingegangen.

Bei der Figur 2 handelt es sich um eine vergrößerte Darstellung der Vorrichtung 1 gemäß Figur 1 im Bereich des Schneidrahmens11, in der insbesondere das vordere Ende 18 des zu schneidenden Lebensmittels 2, das zum einen in der Rinne 13 liegt und zum anderen von dem Niederhalter 16 gehalten wird, gut zu erkennen ist. Darüber hinaus ist zu erkennen, dass sowohl der Niederhalter 16 als auch die Rinne 13 auf einer dem Lebensmittel 2 zugewandten Seite hin mit parallel zu der Vorschubrichtung 36 verlaufenden Rippen 54 versehen sind, die in einem Abstand zueinander angeordnet sind. Diese Rippen 54 bewirken, dass die sonst sehr glatten Oberflächen des Niederhalters 16 und der Rinne 13 deutlich rauer werden, so dass eine weitere Verdrehsicherung des Lebensmittels 2 gegeben ist und einem möglichen Kreissägeblattbruchs vorgebeugt wird.

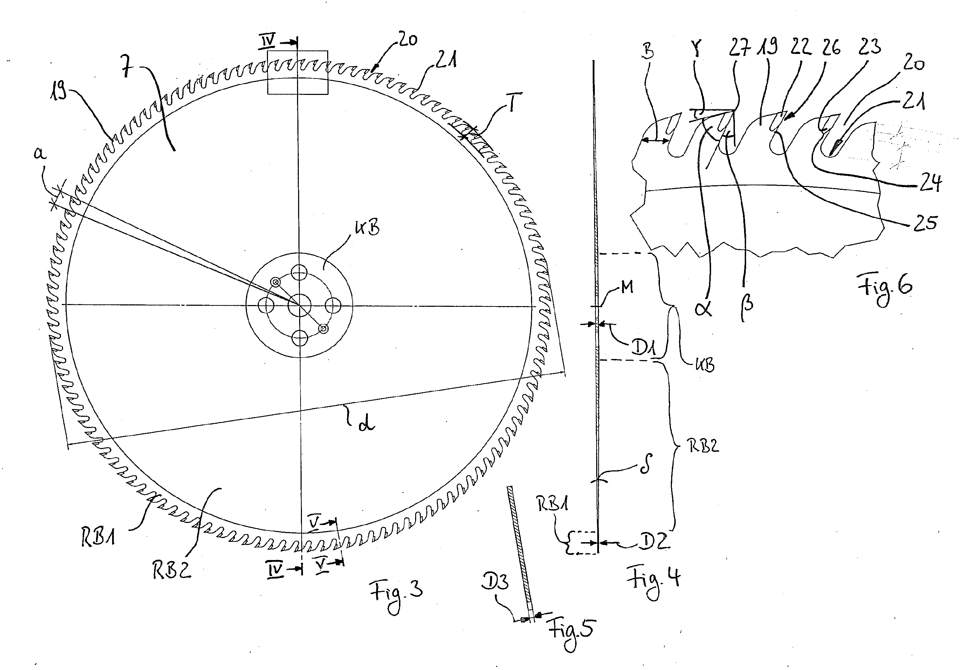

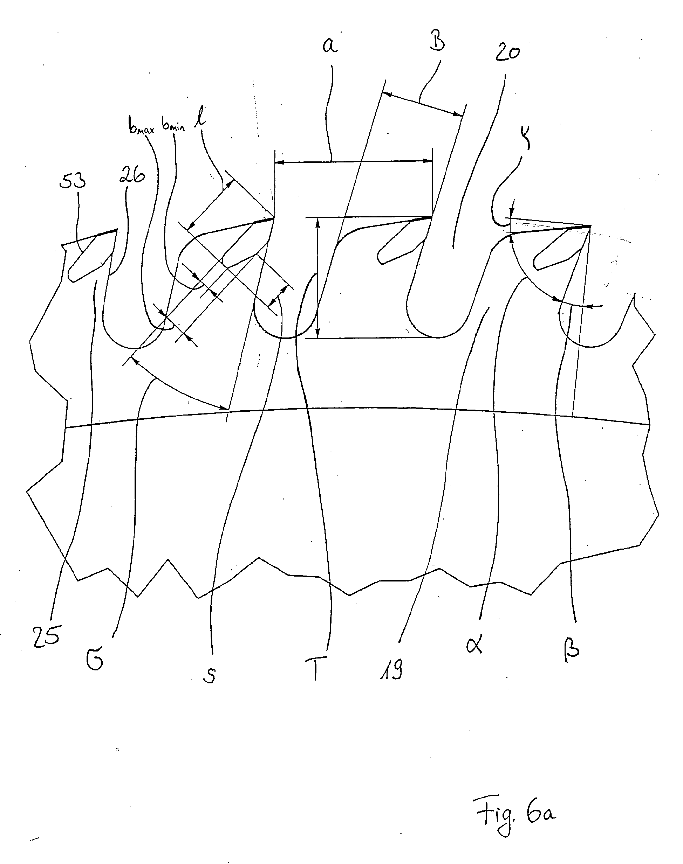

Die Figuren 3 bis 6 zeigen das Kreissägeblatt7 der Vorrichtung 1 aus Figur 1 in einer Ansicht, in zwei Schnitten sowie in einer Detailansicht. Der Durchmesser d des Kreissägeblatts 7 beträgt etwa 660 mm. Das gezeigte Kreissägeblatt 7 besitzt 120 Zähne 19 mit jeweils einer Breite B von 8,7 mm, die gleichmäßig über den Umfang des Kreissägeblatts 7 verteilt sind, was bedeutet, dass benachbarte Zähne 19 immer den gleichen Abstand a zueinander aufweisen. Dieser Abstand a beträgt hier 17,3 mm. Zwischen benachbarten Zähnen 19 verbleibt jeweils eine Spankammer 20 mit abgerundetem, konkav verlaufendem Grund 21. Die Zähne 19 sind jeweils mit Einsatzstücken 22 aus Hartmetall ausgestattet, wobei ein Fußabschnitt 23 der jeweiligen Einsatzstücke 22 in entsprechende Aussparungen 24 der Zähne 19 eingesetzt und verschweißt ist. In der Figur 6 sind einzelne Zähne 19 des Kreissägeblatts 7 vergrößert dargestellt, so dass deren Aufbau besonders gut erkennbar ist. Die Aussparungen 24 in den Zähnen 19 sind so angeordnet, dass auf einer der Spankammer 20 zugewandten Seite hin eine Haltenase 25 verbleibt, an der sich ein Einsatzstück 22 bei Belastung abstützen kann. Die Geometrie von Aussparung 24 und Einsatzstück 22 ist so gewählt, dass eine Spanfläche 26 ausgehend von einer Schneidkante 27 des Zahns 19 in einer Flucht bis zum Grund 21 der Spankammer 20 verläuft, so dass die Seitenflächen der Spankammer 20 von zwei etwa parallel verlaufenden geraden Ebenen gebildet werden. Ein Keilwinkel α der Zähne 19 beträgt 50°, ein Spanwinkel β 26° und ein Freiwinkel γ 14°. Durch den gegenüber herkömmlichen Kreissägeblättern groß gewählten Spanwinkel β ist der Keilwinkel α verhältnismäßig spitz, was sich insbesondere bei knochenhaltigem Gut als besonders vorteilhaft herausgestellt hat.

Eine Tiefe T der Spankammern 20, die einer Hälfte der Differenz zwischen dem Außendurchmesser des Kreissägeblatts 7 und einem Durchmesser eines Kreises, auf dem sich die Gründe 21 der Spankammern 20 befinden, entspricht, beträgt vorliegend 14,7 mm.

In dem in der Figur 4 gezeigten Schnitt ist zu erkennen, dass das Kreissägeblatt 7 in einem inneren Kreisbereich KB eine konstante Dicke D1 von 4 mm besitzt, während es in einem äußeren Ringbereich RB1 eine konstante Dicke D2 von 1,3 mm aufweist. In diesen beiden vorgenannten Bereichen verlaufen die beiden Seitenflächen des Kreissägeblatts demnach parallel. In den Bereichen, in denen sich die Einsatzstücke 22 aus Hartmetall befinden beträgt die Dicke D3 des Kreissägeblatts 1,4 mm (vergleich Figur 5), was darauf zurückzuführen ist, dass die Einsatzstücke 22 zu beiden Seiten des Kreissägeblatts 7 jeweils 0,05 mm überstehen. Die unterschiedliche Dicke zwischen dem inneren Kreisbereich KB und dem äußeren Ringbereich RB1 des Kreissägeblatts 7 entsteht dadurch, dass die linke Seite in der Figur 4 zwar vertikal verläuft, die rechte Seite jedoch ausgehend von dem inneren Kreisbereich KB des Kreissägeblatts 7 jeweils nach oben und unten schräg verläuft. Somit verlaufen die beiden Seiten des Kreissägeblatts 7 in der Figur 4 in einem inneren Kreisbereich KB2 in einem Winkel δ zueinander, und zwar in einem Winkel von 0,5°. Durch diese Geometrie im Querschnitt wird überraschender Weise zusätzlich erreicht, dass das Kreissägeblatt 7 vermindert schwingt und somit geräuscharm arbeitet. Auch das Weglassen von im Stand der Technik vorgesehenen Lasereinschnitten 28 ("Notenschlüssel"), die bei dem Kreissägeblatt 7 in der Figur 1 der Anschaulichkeit halber eingezeichnet sind und die typischerweise geräuschmindernd wirken sollen, sind bei dem erfindungsgemäßen Kreissägeblatt 7 kontraproduktiv, so dass auf solchen Einschnitte verzichtet werden kann oder sollte.

Anhand der Figur 5 soll dargestellt werden, dass die Einsatzstücke 22 jeweils um 0,05 mm zu beiden Seiten des Kreissägemessers 7 überstehen, wobei dort die Dicke D3 1,4 mm beträgt.

In der Figur 6a ist eine vergrößerte Darstellung eines alternativen Kreissägeblatts im Bereich der Zähne 19 dargestellt, die eine etwas andere Geometrie im Vergleich zu den Zähnen 19 aus Figur 6 aufweisen, so dass ein solches Kreissägeblatt lediglich 100 Zähne 19 umfasst. Die Zähne 19 besitzen eine größere Breite B von 11 mm, wobei der Abstand a zwischen benachbarten Zähnen 19 20,7 mm beträgt. Die Tiefe T der Spankammer 20 beträgt 15,7 mm. Der Keilwinkel α der Zähne 19 beträgt 65°, der Spanwinkel β 15° und der Freiwinkel γ 10°. Auch die Ausrichtung der Einsatzstücke 22 unterscheidet sich in der Figur 6a von der Ausrichtung der Einsatzstücke 22 in der Figur 6. Die Einsatzstücke 22, die eine Länge I von 9 mm besitzen, sind derart geneigt, dass lediglich deren spitzer Bereich an der Oberfläche der Zähne 19 sichtbar ist und ihr übriger Teil in den Zähnen 19 eingebettet ist. Hierdurch entstehen große Haltenasen 25, an denen sich die Einsatzstücke 22 bei Belastung abstützen können. Die Spanfläche 26 der Zähne bildet mit einer geraden Rückseite 53 der Einsatzstücke 22 einen Winkel σ von 30°. Die Einsatzstücke 22 weisen in ihrem Querschnitt eine maximale Breite bₘₐₓ von 3 mm und eine minimale Breite bₘᵢₙ von 1,5 mm auf, wobei die Reduzierung der Querschnittsbreite auf einer Strecke s von 4 mm kontinuierlich verläuft.

Die Figur 7 zeigt einen Vertikalschnitt durch die Vorrichtung 1 aus Figur 1 im Bereich des Kreissägeblatts 7, wobei der Schneidrahmen 11, das Kreissägeblatt 7 und der Schachtboden 12 ohne Rinne 13 zu erkennen ist.

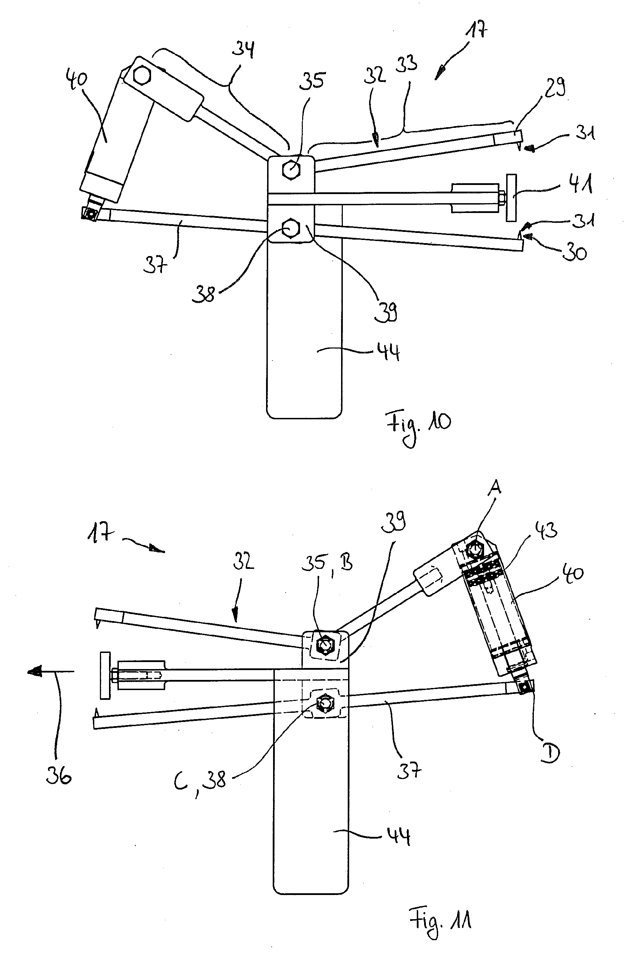

Aus der Figur 8 geht der Schneidguthalter 17 der Vorrichtung 1 aus Figur 1 hervor, der ein oberes Eingriffelement 29 und ein unteres Eingriffelement 30 aufweist, wobei das obere Eingriffelement 29 breiter ausgebildet ist und mit sechs Dornen 31 ausgestattet ist während das untere Eingriffelement 30 schmaler ausgebildet ist und nur zwei Dornen 31 besitzt. Das obere Eingriffelement 29 dient zum Eingreifen in eine obere, dem Schachtboden 12 abgewandte Oberfläche des zu schneidenden Lebensmittels 2, das hier aus Gründen einer besseren Übersichtlichkeit nicht dargestellt ist. Das obere Eingriffelement 29 ist an einem Arm 32 mit zwei Abschnitten 33, 34 angebracht, wobei die beiden Abschnitte 33, 34 des Arms 32 einen Winkel ε miteinander bilden. An der Knickstelle des Arms 32 ist dieser an einer Drehachse 35 gelagert, die senkrecht zu einer Vorschubrichtung 36 und parallel zu dem Schachtboden 12 ausgerichtet ist. Auch das untere Eingriffelement 30, das zum Eingreifen in eine untere, dem Schachtboden 12 zugewandte Oberfläche des zu schneidenden Lebensmittels 2 dient, ist mit einem Arm 37 versehen, der ebenfalls an einer analogen Drehachse 38, die in der Figur 10 zu erkennen ist, gelagert ist, wobei der Arm 37 gerade ausgebildet ist. Die beiden Arme 32, 37 sind so gegeneinander verdrehbar, dass die beiden Eingriffelemente 29, 30 aufeinander zu oder voneinander weg bewegbar sind. Die beiden Drehachsen 35, 38 sind an einem Lagerbock 39 zusammengefasst, der wiederum mittels einer Vorschubeinrichtung 44, die in den Figuren 10 und 11 teilweise dargestellt ist, in Vorschubrichtung 36 vorschiebbar ist. Die Eingriffelemente 29, 30 sind integral mit den Armen 32, 37 ausgebildet, was bedeutet, dass ein vorderer verbreiterter Bereich der Arme 32, 37 der jeweils die Eingriffelemente 29, 30 bildet, nahtlos in den eigentlichen Arm 32, 37 übergeht. Somit werden die Eingriffelemente 29, 30 durch ein dem Lebensmittel 2 zugewandtes Ende der Arme 32, 37 mit dem daran befindlichen Dornen 31 gebildet.

An den den Eingriffelementen 29, 30 abgewandten Enden der jeweiligen Arme 32, 37 ist ein Antriebselement 40 angeordnet, das als Kolben-Zylinder-Einheit ausgebildet ist und gelenkig an die beiden Arme 32, 37 angeschlossen ist. Somit sind die Enden über das Antriebselement 40 verbunden, wobei der Abstand der beiden Enden über das Antriebselement 40 verändert werden kann, wodurch eine entsprechende Bewegung der Eingriffelemente 29, 30 induziert wird. Der Schneidguthalter 17 ist ferner mit einem Anschlagelement 41 ausgestattet, an dem das der Schneideinrichtung 4 abgewandte, also hinteren Ende des Lebensmittels 2 zu liegen kommt. Das Anschlagelement 41 befindet sich in Vorschubrichtung 36 betrachtet hinter den Eingriffelementen 29, 30. Weitere Details zu dem Schneidguthalter 17 gehen aus den Figuren 10 und 11 hervor.

Die Figur 9 zeigt einen alternativ ausgebildeten Schneidguthalter 17', der zwei obere Eingriffelemente 29' mit jeweils drei Dornen 31 besitzt, die jeweils über einen abgewinkelten Arm 32' analog zu dem Arm 32 gemäß Figur 8 verfügen. Die beiden Arme 32' sind um dieselbe Drehachse 35', die an dem Lagerbock 39 befestigt ist, drehbar. Die den Eingriffelementen 29' abgewandten Enden der Arme 32' verfügen jeweils über eine Antriebselement 40' in Form einer Kolben-Zylinder-Einheit, wobei beide Antriebselemente 40' mittels einer Querstrebe 42 mit dem Arm 37 des unteren Eingriffelements 30 verbunden sind. Die Ausbildung eines sozusagen zweigeteilten oberen Eingriffelements 29' ist für den Fall zweckdienlich, bei dem die obere Kontur eines zu schneidenden Lebensmittels 2 unregelmäßig ist, da die beiden Arme 32' einen unterschiedlichen Öffnungswinkel mit dem untern Arm 37 bilden können. In solch einem Fall verlaufen die beiden Arme 32' der oberen Eingriffelemente 29' nicht parallel.

In den Figuren 10 und 11 ist der Schneidguthalter 17 aus Figur 1 bzw. 8 einmal in einer Vorderansicht und einmal in einer Rückansicht dargestellt, so dass sich die einzelnen Elemente in den beiden Figuren an spiegelverdrehten Orten befinden. Das erste Eingriffelement 29 in Form von Dornen 31 mit seinem Arm 32 aus zwei winklig zueinander angeordneten Abschnitten 33, 34 sowie das zweite Eingriffelement 30 - ebenfalls in Form von Dornen 31 - mit seinem gerade verlaufenden Arm 37 sind in den Figuren besonders gut erkennbar.

Insbesondere aus der Figur 11 geht hervor, dass die beiden Drehachsen 35, 38 der Arme 32, 37 und die beiden den Eingriffelementen 29, 30 abgewandten Enden der Arme 32, 37, die gelenkig mit der Kolben-Zylinder-Einheit verbunden sind, ein Gelenk-Viereck mit den Gelenkpunkten A, B, C, D bilden, wobei die durch die Kolben-Zylinder-Einheit definierte Länge des Gelenk-Vierecks im Rahmen der Hublänge eines Kolbens 43 der Kolben-Zylinger-Einheit variabel ist. Mittels der Vorschubeinrichtung 44 ist der Lagebock 39 in und entgegen der Vorschubrichtung 36 verfahrbar.

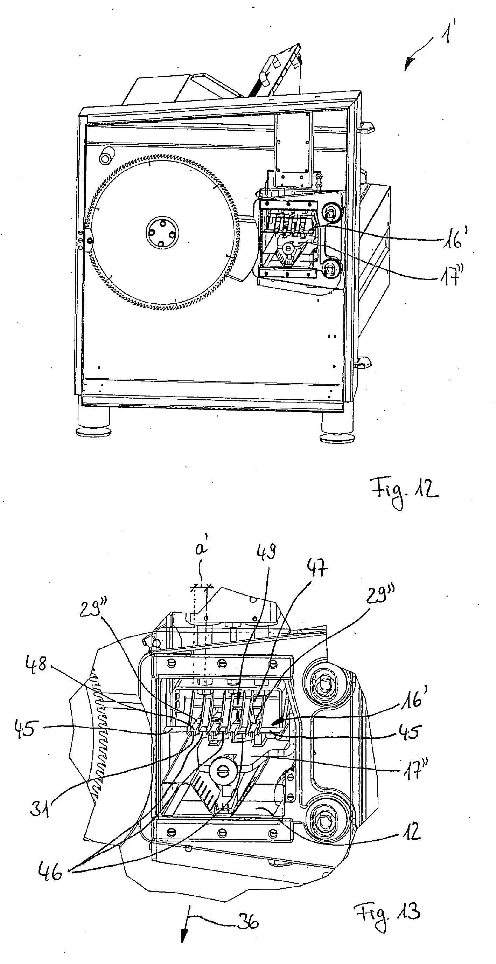

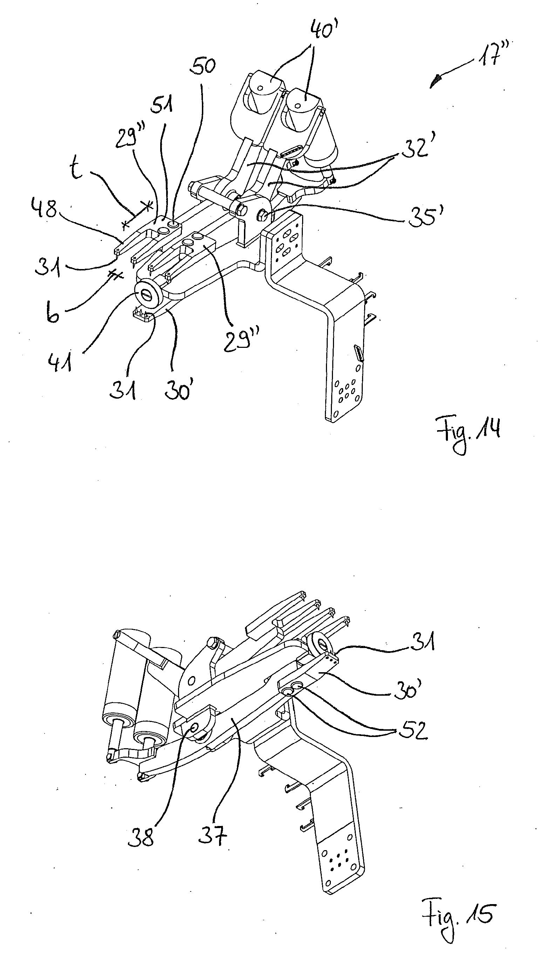

Eine alternativ ausgebildete Vorrichtung 1' zum Schneiden eines gefrorenen, strangförmigen Lebensmittels 2 in Scheiben ist in der Figur 12 gezeigt, wobei sich die Vorrichtung 1' von der Vorrichtung 1 aus Figur 1 in der Ausbildung sowohl des Niederhalters 16' als auch des Schneidguthalters 17" unterscheidet, was besonders gut in der Figur 13 zu erkennen ist. Der Schneidguthalter 17" weist zwei obere Eingriffelemente 29" mit jeweils zwei Dornen 31 auf, so dass der Schneidguthalter 17" insgesamt über 4 obere Dornen 31 verfügt. Der genaue Aufbau des Schneidguthalters 17" mit den oberen Eingriffelementen 29", einem unteren Eingriffelement 30', dem Anschlagelement 41 und den Antriebselementen 40' geht aus den Figuren 14 und15 hervor, die im Nachfolgenden noch im Detail beschrieben werden.

Der in der Figur 13 dargestellte Niederhalter 16' weist fünf Kontaktbereiche 45, 46 auf, mit denen der Niederhalter 16' an der dem Niederhalter 16' zugewandten Oberfläche des nicht in der Figur 13 gezeigten Lebensmittels anliegt. Die zwei äußeren Kontaktbereiche 45 des Niederhalters 16' weisen eine größere Breite auf, als die drei übrigen Kontaktbereiche 46, wobei alle Kontaktbereiche 45, 46 von Flachstahl-Abschnitten gebildet werden, von deren beiden Seiten jeweils Streben 47 nach oben in Richtung einer Oberseite des Zuführbereichs 5 führen. Benachbarte Kontaktbereiche 45, 46 sind beabstandet voneinander angeordnet, so dass in eine Richtung senkrecht zu der Vorschubrichtung 36 und parallel zu dem Schachtboden 12 ein Abstand a' verbleibt, der eine Breite b eines Fingers 48 (siehe Figur 14) des Schneidguthalters 17" um einige Millimeter übersteigt. Durch die beabstandete Anordnung der Kontaktbereiche 45, 46 entstehen zwischen denselben demnach Aussparungen 49, durch die die Finger 48 des Schneidguthalters 17", an denen die Dornen 31 angeordnet sind, hindurchgeführt werden können, obwohl der Niederhalter 16' mit dem zu schneidenden Lebensmittel in direktem Kontakt steht. Somit wird gewährleistet, dass das Ende eines zu schneidenden Lebensmittels, das typischerweise nur noch eine sehr geringe Länge aufweist, zum einen von dem Niederhalter 16' herabgedrückt wird und gleichzeitig von den oben sowie unten eingreifenden Dornen 31 des Schneidguthalters 17" gesichert wird. Schneidguthalter 17" und Niederhalter 16' bleiben also in direktem Kontakt mit dem zu schneidenden Lebensmittel, bis eine letzte Scheibe des Lebensmittels geschnitten wurde, was die Schneidqualität insbesondere bei den letzten Scheiben deutlich erhöht.

Bezüglich der Ausführung des erfindungsgemäßen Niederhalters 16' sind zahlreiche Alternativen denkbar, ausschlaggebend ist lediglich, dass zwischen den Kontaktbereichen 45 ein Freiraum im Sinne der Aussparungen 49 verbleibt, durch den die oberen Eingriffelemente 29" des Schneidguthalters 17" hindurch gelangen können, obwohl die Kontaktbereiche 45, 46 des Niederhalters 16' mit dem zu schneidenden Lebensmittel in direktem Kontakt bzw. in Eingriff sind.

Die Figuren 14 und 15 zeigen jeweils eine dreidimensionale Ansicht des erfindungsgemäßen Schneidguthalters 17" aus Figur 12 und 13, wobei die Figur 13 eine Ansicht von oben und die Figur 14 eine Ansicht von unten ist. Der grundsätzliche Aufbau des Schneidguthaltes 17" entspricht dem Aufbau des Schneidguthalters 17 bzw. 17' aus den Figuren 8 bis 11 mit einem Anschlagelement 41, einem beziehungsweise zwei oberen Eingriffelementen 29", einem unteren Eingriffelement 30', wobei die Eingriffelemente 29", 30' jeweils über Arme 32', 37 mit einer Drehachse 35', 38 beziehungsweise einem Antriebselement 40' verbunden sind. Im Unterschied zu den Figuren 8 bis 11 sind die Eingriffelemente 29", 30' gemäß den Figuren 14 und 15 als von den Armen 32', 37 separate Elemente ausgebildet, die über lösbare Verbindungsmittel 50, nämlich Schraubverbindungen, mit den Armen 32', 37 verbunden werden können. Dies ist von Vorteil, da auf diese Weise in Abhängigkeit von dem zu schneidenden Lebensmittel verschiedenartig ausgebildete Eingriffelemente 29", 30' eingesetzt werden können, wobei ein Wechsel der Eingriffelemente durch einfaches Lösen und Anziehen von Schrauben erfolgt. Alternativ ist denkbar, die Eingriffelemente über wieder lösbare Steckverbindungen mit den Armen zu verbinden. Auch die Verbindung mittels einer magnetischen Wirkung der Eingriffelemente und/oder der Arme wäre denkbar.

Die beiden oberen Eingriffelemente 29" weisen jeweils die Form eines Hufeisens auf beziehungsweise sind U-förmig ausgebildet, wobei an den Enden von zwei länglichen Fingern 48 jeweils ein Dorn 31 angeordnet ist, der beim Vorschubvorgang in das zu schneidende Lebensmittel eingreift. Eine Basis 51 des U-förmigen Eingriffelements 29" weist eine große Tiefe t auf, so dass dort die Verbindungsmittel 50 zur Anbringung des Eingriffelements 29" an dem Arm 32' angeordnet sind.

Das untere Eingriffelement 30', dessen Aufbau gut in der Figur 15 erkennbar ist, wird aus einem Flachstahl gebildet, das auf seinem dem Arm 37 zugewandten Ende abermals mittels Schrauben 52 mit dem Arm 37 verbunden ist und auf seiner dem Arm 37 abgewandten Ende mit drei Dornen 31 versehen ist.

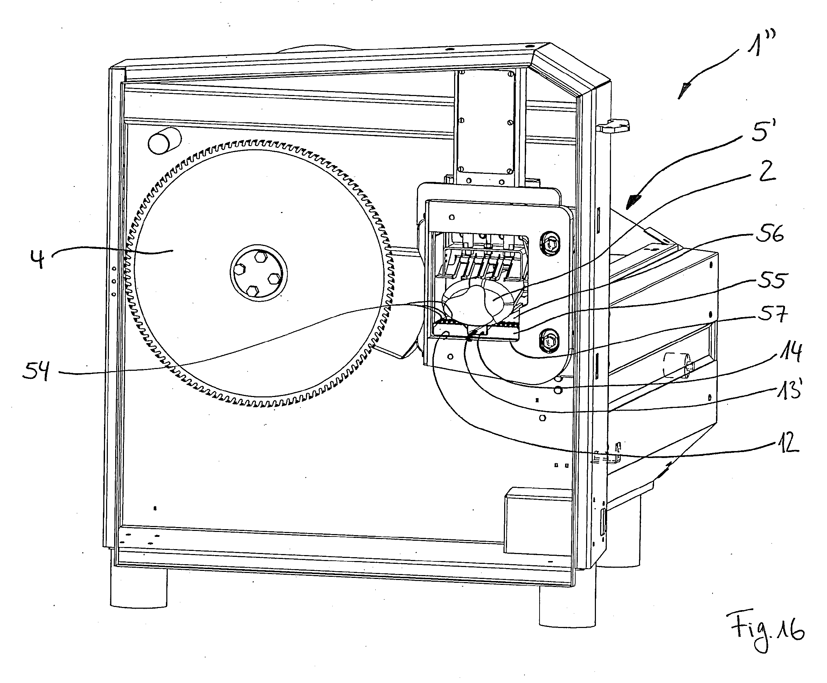

Schließlich zeigt die Figur 16 eine alternativ ausgebildete Vorrichtung 1" zum Schneiden eines gefrorenen, strangförmigen Lebensmittels 2 in Scheiben, wobei sich lediglich der Zuführbereich 5' derselben von dem der Vorrichtung 1 aus Figur 1 unterscheidet. Die Vorrichtung 1" weist nämlich einen auf dem Schachtboden 12 angeordneten Schachteinsatz 55 auf, der im Querschnitt als rechteckiger Hohlkörper ausgebildet ist und eine Oberseite 56 sowie eine Unterseite 57 aufweist. Ober- und Unterseite 56, 57 verlaufen parallel zueinander und parallel zu dem Schachtboden 12. Lediglich in einem mittleren Bereich der Oberseite 56 ist eine Rinne 13' mit rechteckförmigem Querschnitt eingelassen, wobei ein Rinnengrund 14' nur wenige Zentimeter breit ist. Hauptsächlich kommt das Lebensmittel 2 demnach auf der parallel zu dem Schachtboden 12 verlaufenden Oberseite 56 des Schachteinsatzes 55 zu liegen, wobei dieser mit länglich ausgebildeten Rippen 54 ausgestattet ist, die sowohl parallel zueinander als auch zur Vorschubrichtung 36 verlaufen und jeweils eine Länge von einigen Zentimetern aufweisen. Sie bilden kleine Erhöhungen, die dem der Schneideinrichtung 4 zugewandten Ende des Lebensmittels 2 einen besonders griffigen Halt geben, so dass einem Verdrehen des gefrorenen Lebensmittels 2 entgegen gewirkt wird.

### Bezugszeichenliste

- 1, 1', 1": Vorrichtung
- 2: Lebensmittel
- 3: Maschinengestell
- 4: Schneideinrichtung
- 5, 5': Zuführbereich
- 6: Schneidorgan
- 7: Kreissägeblatt
- 8: Mittelachse
- 9: Arm (Schwinge)
- 10: Kreuz (feste Drehachse)
- 11: Schneidrahmen
- 12: Schachtboden
- 13, 13': Rinne
- 14, 14': Rinnengrund
- 15: Rinnenoberseite
- 16, 16': Niederhalter
- 17, 17', 17": Schneidguthalter
- 18: vorderes Ende Lebensmittel
- 19: Zahn
- 20: Spankammer
- 21: Grund
- 22: Einsatzstück
- 23: Fußabschnitt
- 24: Aussparung in Zahn
- 25: Haltenase
- 26: Spanfläche
- 27: Schneidkante
- 28: Lasereinschnitt
- 29, 29', 29": oberes Eingriffelement
- 30, 30': unteres Eingriffelement
- 31: Dorn
- 32, 32': Arm (oberer)
- 33, 34: Abschnitt
- 35, 35': Drehachse
- 36: Vorschubrichtung
- 37: Arm (unterer)
- 38: Drehachse
- 39: Lagerbock
- 40,40': Antriebselement
- 41: Anschlagelement
- 42: Querstrebe
- 43: Kolben
- 44: Vorschubeinrichtung
- 45, 46: Kontaktbereich
- 47: Strebe
- 48: Finger
- 49: Aussparung
- 50: Verbindungsmittel
- 51: Basis
- 52: Schrauben
- 53: Rückseite Einsatzstück
- 54: Rippe
- 55: Schachteinsatz
- 56: Oberseite
- 57: Unterseite

- A, B, C, D: Gelenkpunkt
- L: Länge des Schachtbodens
- I: Länge des Einsatzstücks
- M: Mitte
- T, t: Tiefe
- d: Durchmesser
- a, a': Abstand
- B: Breite Zahn
- b: Breite
- t: Tiefe Basis
- s: Strecke
- bₘₐₓ: maximale Breite
- bₘᵢₙ: minimale Breite
- D1, D2, D3: Dicke
- KB: Kreisbereich
- RB1: äußerer Ringbereich
- RB2: innerer Ringbereich
- α: Keilwinkel
- β: Spanwinkel
- γ: Freiwinkel
- δ: Winkel
- ε: Winkel
- σ: Winkel

## Patentansprüche

1. Vorrichtung (1) zum Schneiden eines gefrorenen, strangförmigen Lebensmittels (2) in Scheiben mit
a) einem Maschinengestell (3),
b) einer Schneideinrichtung (4) mit einem in oder an dem Maschinengestell (3) gelagerten Schneidorgan (6) in Form eines Kreissägeblatts (7), das zum einen um seine Mittelachse (8) rotierbar und zum anderen innerhalb einer durch das Kreissägeblatt (7) definierten Schneidebene beweglich ist,
c) einem Zuführbereich (5) für das zu schneidende Lebensmittel (2), aus dem heraus das Lebensmittel (2) so auf die Schneideinrichtung (4) zu vorschiebbar ist, dass sukzessive Scheiben von dem Lebensmittel (2) abscheidbar sind, wobei das Lebensmittel (2) in dem Zuführbereich (5) in eine Vorschubrichtung (36) bewegbar ist, die senkrecht zu der Schneidebene verläuft,
**dadurch gekennzeichnet, dass** das Kreissägeblatt (7) drehantreibbar an einem in oder an dem Maschinengestell (3) gelagerten Arm (9) gelagert ist und mit dem Arm (9) um dessen gestellfeste Drehachse (10) fortlaufend umläuft oder oszilliert.

2. Vorrichtung nach Anspruch 1, **dadurch gekennzeichnet, dass** die Dicke (D2, D3) des Kreissägeblatts (7) mindestens im Bereich von Zähnen (19), vorzugsweise in einem Ringbereich, der sich von einem Außendurchmesser des Kreissägeblatts (7) 20 mm bis 30 mm radial in Richtung der Mittelachse (8) erstreckt, kleiner als 2 mm, vorzugsweise kleiner als 1,8 mm, weiter vorzugsweise kleiner als 1,7 mm, und/oder der Durchmesser (d) des Kreissägeblatts (7) größer als 500 mm, vorzugsweise größer als 550 mm, weiter vorzugsweise größer als 600 mm ist.

3. Vorrichtung nach Anspruch 1 oder 2, **dadurch gekennzeichnet, dass** eine in Umfangsrichtung des Kreissägeblattes (7) gemessene größte Breite der Zähne (19) kleiner als 20mm, vorzugsweise keiner als 15mm, weiter vorzugsweise kleiner als 12 mm, noch weiter vorzugsweise kleiner als 10 mm beträgt und/oder der Abstand (a) der Schneidkanten (27) jeweils benachbarter Zähne (19) kleiner als 22, vorzugsweise kleiner als 20 mm, weiter vorzugsweise kleiner als 18 mm beträgt.

4. Vorrichtung nach einem der Ansprüche 1-3, **dadurch gekennzeichnet, dass** eine von einer Schneidkante (27) ausgehende Spanfläche (26) eines Zahnes (19) mit einer sich in Richtung eines Grundes (21) einer Spankammer (20) anschließenden Vorderfläche des betreffenden Zahns (19) fluchtet/eine gemeinsame Ebene bildet.

5. Vorrichtung nach einem der Ansprüche 1-4, **dadurch gekennzeichnet, dass** die von der Schneidkante (27) ausgehende Spanfläche (26) eines Zahns (19) mit einer der Spankammer (20) abgewandten Rückseite (53) des Einsatzstücks (22) einen Winkel (σ) bildet, der zwischen 25° und 35°, vorzugsweise zwischen 28° und 32° beträgt.

6. Vorrichtung nach einem der Ansprüche 1 bis 5, **dadurch gekennzeichnet, dass** eine Differenz zwischen dem Außendurchmesser (d) des Kreissägeblatts (7) und dem Durchmesser eines Kreises, auf dem sich die Gründe (21) der Spankammern (20) befinden, mindestens 20 mm, vorzugsweise mindestens 25 mm beträgt.

7. Vorrichtung nach einem der Ansprüche 1 bis 6, **dadurch gekennzeichnet, dass** eine der im Entstehen begriffenen Scheibe des zu schneidenden Lebensmittels (2) zugewandte Seitenfläche des Kreissägeblatts (7) unter einem Winkel (δ) zwischen 2° und 0,2°, vorzugsweise unter einem Winkel (δ) zwischen 1° und 0,4° geneigt zu einer gegenüber liegenden Seitenfläche des Kreissägeblatts (7) verläuft, so dass eine Dicke (D1, D2, D3) des Kreissägeblatts (7) in radiale Richtung nach außen abnimmt, wobei vorzugsweise die gegenüber liegende Seitenfläche des Kreissägeblatts (7) gegenüber der Drehachse (8) unter einem Winkel von 90° verläuft.

8. Vorrichtung nach einem der Ansprüche 1 bis 7, **dadurch gekennzeichnet, dass** das Kreissägeblatt in einem äußeren Ringbereich, der sich von einem Außendurchmesser des Kreissägeblatts radial in Richtung der Mittelachse erstreckt, sowie in einem inneren Kreisbereich, der sich von einem Mittelpunkt des Kreissägeblatts radial nach außen erstreckt, parallel zueinander verlaufende Seitenflächen besitzt, während die Seitenflächen des Kreissägeblatts in einem inneren Ringbereich, der sich zwischen dem äußeren Ringbereich und dem inneren Kreisbereich erstreckt, geneigt zueinander verlaufen.

9. Vorrichtung nach einem der Ansprüche 1 bis 8, **dadurch gekennzeichnet, dass** die Hartmetall-Einsatzstücke (22) über mindestens eine der beiden Seitenflächen des Kreissägeblatts (7) in axiale Richtung überstehen und zwar vorzugsweise um ein Maß zwischen 0,05 mm und 0,25 mm, weiter vorzugsweise zwischen 0,15mm und 0,20mm.

10. Vorrichtung nach einem der Ansprüche 1 bis 9, **gekennzeichnet durch** eine Abschaltautomatik oder eine Einrichtung zur Reduzierung der Winkelgeschwindigkeit des Arms (9), die bei einer Überschreitung eines Grenzwertes für einen Widerstand des Arms (9) während eines zerspanenden Eingriffs des Kreissägeblatts (7) in das Lebensmittel (2), aktivierbar ist.

11. Verfahren zum Schneiden eines gefrorenen, strangförmigen Lebensmittels (2) in Scheiben mit den folgenden Verfahrensschritten:
a) Das zu schneidende Lebensmittel (2) wird in einen Zuführbereich (5) einer Vorrichtung (1) zum Schneiden eingelegt.
b) Aus dem Zuführbereich (5) heraus wird das Lebensmittel (2) auf eine Schneideinrichtung (4) der Vorrichtung (1) vorgeschoben, sodass mittels eines in Form eines Kreissägeblatts (7) ausgebildeten Schneidorgans (6) der Schneideinrichtung (1) von dem Lebensmittel (2) an dessen vorderen Ende (18) sukzessive Scheiben abgeschnitten werden.
c) Das Kreissägeblatt (7) wird um seine Mittelachse (8) und gleichzeitig innerhalb einer von dem Kreissägeblatt (7) definierten Schneidebene bewegt.
d) Während des Vorschiebens wird das Lebensmittel (2) in eine Vorschubrichtung (36) bewegt die senkrecht zu der Schneidebene verläuft.
**gekennzeichnet durch** das folgende Merkmal
e) Ein Arm (9), an dem die Mittelachse (8) des Kreissägeblatts (7) gelagert ist, wird um eine gestellfeste Drehachse (10) rotiert oder vollführt eine oszillierende Bewegung um diese Drehachse (10).

12. Verfahren nach Anspruch 11, **dadurch gekennzeichnet, dass** die Drehzahl n_{K} des Kreissägeblatts (7) im Verhältnis zu der Drehzahl n_{A} des Arms (9) mindestens so groß gewählt wird, dass das Volumen der Späne, die während eines Durchlaufs eines Zahns (19) durch den in dem zu schneidenden Lebensmittel (2) erzeugten Sägespalt erzeugten Späne ein Volumen besitzen, das kleiner ist als das Volumen der zwischen zwei benachbarten Zähnen (19) befindlichen Spankammer (20), wobei die Drehzahl des Kreissägeblatts (7) vorzugsweise größer als 1800 1/min, weiter vorzugsweise größer als 2000 1/min beträgt.

13. Verfahren nach Anspruch 11 oder 12, **dadurch gekennzeichnet, dass** die Rotation oder eine Oszillationsbewegung des Arms (9) bei Überschreiten eines Grenzwertes eines Widerstands des Arms (9) bei dem Durchtritt des Kreissägeblatts (7) durch das Lebensmittel (2) abgeschaltet wird oder dass die Drehzahl n_{A} oder eine Winkelgeschwindigkeit des Arms (9) bei Überschreiten des Grenzwertes eines Widerstands des Arms (9) bei dem Durchtritt des Kreissägeblatts (7) durch das Lebensmittel (2) reduziert wird.

14. Verfahren nach einem der Ansprüche 11 bis 13, **dadurch gekennzeichnet, dass** das Verhältnis der Drehzahl n_{K} des Kreissägeblatts (7) zu der Drehzahl n_{A} des Arms (9) mindestens 15:1, vorzugsweise mindestens 18:1, weiter vorzugsweise mindestens 20:1, noch weiter vorzugsweise mindestens 30:1, beträgt..
